(19) Europäisches Patentamt
European Patent Office
Office européen des brevets

(11) **EP 2 269 964 B1**

(12) **EUROPÄISCHE PATENTSCHRIFT**

(45) Veröffentlichungstag und Bekanntmachung des Hinweises auf die Patenterteilung:
**18.12.2013 Patentblatt 2013/51**

(21) Anmeldenummer: **10400030.2**

(22) Anmeldetag: **14.05.2010**

(51) Int Cl.:
*C04B 111/00* (2006.01)  *C04B 28/06* (2006.01)
*C04B 33/22* (2006.01)  *C04B 35/565* (2006.01)
*C04B 35/63* (2006.01)  *C04B 35/66* (2006.01)
*F23M 5/04* (2006.01)  *F23M 5/00* (2006.01)
*F27D 1/00* (2006.01)

(54) **Backofen zur Herstellung von Brot, Brötchen usw.**

Oven for baking bread, rolls, etc.

Four destiné à la fabrication de pain, de petits pains et analogues

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **22.06.2009 DE 102009029736**

(43) Veröffentlichungstag der Anmeldung:
**05.01.2011 Patentblatt 2011/01**

(73) Patentinhaber:
• **Karl Ahlborn Maschinenfabrik KG**
**37247 Großalmerode (DE)**
• **Conrad Liphard & Söhne GmbH**
**37247 Großalmerode (DE)**

(72) Erfinder:
• **Brünner, Sascha**
**65558 Cramberg (DE)**
• **Hinkelmann, Frank**
**37247 Großalmerode (DE)**

• **Ahlborn, Detlef, Dr.-Ing.**
**37247 Großalmerode (DE)**

(74) Vertreter: **Walther, Robert**
**Patentanwälte**
**Walther - Walther & Hinz GbR**
**Heimradstrasse 2**
**34130 Kassel (DE)**

(56) Entgegenhaltungen:
**EP-B1- 0 333 423    WO-A2-03/027348**
**US-A- 5 233 144**

• **Karl - Ludwig Diehl: "Gewölbe zum Brotbacken in der Biedermeierzeit: die Backofenbauer des Westerwaldes" Wikipedia 25. Dezember 2007 (2007-12-25), XP002601105 Gefunden im Internet: URL:www.ureader.de/msg/14444975.aspx [gefunden am 2010-10-15]**

**Beschreibung**

Die Erfindung betrifft einen Backofen zur Herstellung von Brot, Brötchen usw., wobei der Backraum eine Auskleidung und/oder mindestens eine Backplatte aufweist, wobei sowohl die Auskleidung als auch die Backplatte aus einer bestimmten Mischung herstellbar ist.

Backöfen zur Herstellung von Brot und Brötchen sowie auch von Kuchen sind von alters her bekannt. Bis in die heutige Zeit werden auch sogenannte Steinbacköfen gebaut, wobei mit solchen Steinbacköfen ein im Wesentlichen optimales Backergebnis bei der Herstellung beispielsweise von Brot erzielt wird. Dies liegt im Wesentlichen daran, dass die Wärmeübertragungswerte, und hier insbesondere die Wärmeleitfähigkeit und die Strahlungseigenschaften der keramischen Oberflächen, bei solchen Backöfen nahezu optimale Werte erreichen.

Darüber hinaus sind Backöfen bekannt, die mit Schamott ausgekleidet sind. Derartige Backöfen haben hervorragende Backeigenschaften. Jedoch ist die zu erwärmende Masse sehr groß. In Steinbacköfen wird häufig mit abfallender Wärme gebacken; das heißt, der Ofen wird auf eine bestimmte Temperatur erhitzt, das Brot wird in den erhitzten Ofen geschoben, dann wird gebacken, ohne weiterhin zu heizen. Das heißt, nach Ende des Backvorganges muss vor dem nächsten Beschickungsvorgang der Ofen wieder aufgeheizt werden. Dies dauert verhältnismäßig lange bei Backöfen, bei denen eine große Masse aufgeheizt werden muss. Ein Backen "Schuss auf Schuss" ist somit nicht möglich.

Nun sind auch sogenannte Etagenbacköfen bekannt, wo in mehreren Etagen übereinander das Backgut gebacken wird. Bekannt ist in diesem Zusammenhang der Einsatz von Betonplatten. Diese Betonplatten bilden die Unterlage für das Backgut. Sie haben die Funktionen, Wärme zu speichern, Wärme zu leiten, Wärmestrahlung zu absorbieren und zu emittieren. Herkömmliche Betonplatten haben allerdings den Nachteil, dass sie lediglich geringe Wärmeleitfähigkeitswerte aufweisen. In Öfen wird, wie bereits erläutert, teilweise mit fallender Temperatur gebacken. Das heißt, das Aufheizen nach dem Backvorgang muss aus ökonomischen Gründen möglichst schnell gehen. Die Geschwindigkeit, mit der der Backofen aufgeheizt werden kann, ist abhängig von der Aufnahme der Strahlungswärme, der zu erwärmenden Masse und der Wärmeleitfähigkeit der Betonplatten. Ist diese schlecht, dauert der Aufheizvorgang lange, mit der Folge, dass die Leistungsfähigkeit geringer wird. Es gilt somit Ähnliches, wie bei der Auskleidung des Ofens bereits beschrieben.

Nachteilig bei der Verwendung von Betonplatten ist weiterhin, dass die Betonplatten nach längerer Benutzung aufgrund von Temperaturen von bis zu 350° C ihre Festigkeit aufgrund der Zerstörung der CS-H- und CA-H-Phasen, mithin das Betongefüge verlieren.

Das heißt, die vormalige Betonplatte stellt sich dann nicht mehr als Betonplatte dar, sondern hat eher lappenförmigen Charakter, wobei allein die Armierung aus Glasfasern verhindert, dass die Betonplatte vollständig durchbricht. Darüber hinaus ist auch das Backergebnis selbst, bezogen auf einen Steinbackofen, lediglich suboptimal. Der Grund hierfür liegt darin, dass die Wärmeübertragungswerte dieser bekannten Betonplatten eher schlecht sind.

Bereits zu eingangs wurde erwähnt, dass mit sogenannten Steinbacköfen Backeigenschaften realisiert werden können, die verhältnismäßig nahe am Optimum sind.

Die der Erfindung zugrunde liegende Aufgabe besteht demzufolge darin, eine Backplatte und/oder eine Auskleidung für einen Backofen bereitzustellen, wobei sowohl die Auskleidung als auch die Backplatte einerseits über eine nahezu unbegrenzte Lebensdauer verfügen, und andererseits ein gutes Backergebnis bei geringstem Energieeinsatz ermöglicht. Das heißt, dass eine solche Backplatte bzw. auch die Auskleidung des Backofens dann besonders gut geeignet ist, wenn sie hinsichtlich der Strahlungsaufnahme, der Wärmespeicherung und der Wärmeleitung optimale Werte zeigt und insbesondere gute Absorptions- und Emissionseigenschaften für Wärmestrahlung aufweist.

Zur Lösung der Aufgabe wird erfindungsgemäß vorgeschlagen, dass die Auskleidung und/oder die Backplatte aus einer Mischung herstellbar ist, die mindestens folgende Bestandteile aufweist:

　　reaktive Tonerde
　　Mikrosilika
　　Betonverflüssiger
　　Siliciumcarbid

Insbesondere durch die Zugabe von Siliciumcarbid (SiC) wird erreicht, dass eine aus einer solchen Mischung hergestellte Backplatte bzw. auch die Auskleidung eines Ofens optimale Wärmeübertragungswerte und hier insbesondere optimale Wärmeleitfähigkeitswerte und ideale Werte für die Absorption von Strahlung aufweist. Im Einzelnen hat sich herausgestellt, dass die Strahlungswärme sowohl von einer solchermaßen hergestellten Backplatte als auch von der Auskleidung wesentlich schneller aufgenommen wird als von einer konventionellen Betonplatte bzw. einer Auskleidung aus Metall oder von einer Schamott-Auskleidung eines Backofens; die Aufheizphase ist wesentlich kürzer; die Übertragung der Wärme durch die Auskleidung oder die Backplatte hindurch auf das Backgut ist günstiger, was sich beim Brot in einer verbesserten Krustenbildung bemerkbar macht; sowohl die Auskleidung als auch die Backplatte sind überaus temperaturstabil. Für das Backen selbst ergeben sich somit folgende Vorteile: Schnelleres Erreichen der Kerntemperatur im Backgut; Verkürzung der Backzeiten; Verkürzung der Aufheizzeiten mit der Folge, dass 'Schuss auf Schuss' gebacken werden kann, mithin die Leistungsfähigkeit erhöht wird; bessere Krustenbildung, insbesondere am Boden des Backgutes.

Des Weiteren ist vorgesehen, dass zusätzlich zu oder anstelle von reaktiver Tonerde, Tonerdeschmelzzement einsetzbar ist. Durch den vollständigen oder teilweisen Ersatz der Tonerde durch Tonerdeschmelzzement erhält das Produkt aus der erfindungsgemäßen Mischung eine gesteigerte Festigkeit, wobei in diesem Zusammenhang darauf hinzuweisen ist, dass die Festigkeit der Backplatte von höherem Interesse ist als die der Auskleidung, da die Backplatte das Backgut trägt.

Nach einem weiteren Merkmal der Erfindung ist vorgesehen, dass die Mischung einen Zuschlagstoff, z. B. Schamottkörnung, aufweist.

Vorteilhaft sind nach einem weiteren Merkmal der Erfindung die Anteile in der Mischung wie folgt gewählt:

reaktive Tonerde  
Mikrosilika  
Betonverflüssiger $\left.\begin{array}{l}\\\\\\\end{array}\right\}$ 5 – 60 Ma.-%, vorzugsweise 25 Ma.-%

Siliciumcarbid 20 – 95 Ma.-%, vorzugsweise 50 Ma.-%

Der Zuschlagstoff in der Mischung weist einen Anteil in Höhe von 0 bis 20 Ma.-% auf.

In diesem Zusammenhang ist darauf hinzuweisen, dass Siliciumcarbid den Zuschlagstoff zu 100 % ersetzen kann. Insbesondere die Frage der Anteile an Siliciumcarbid ist maßgeblich für die Eigenschaft der Fähigkeit zur Wärmeübertragung und hier insbesondere auch der Wärmeleitfähigkeit.

In Bezug auf die Auskleidung kann vorgesehen sein, dass die Auskleidung aus Wand-, Boden- und/oder Deckenelementen ausgebildet ist. Denkbar ist allerdings auch, die Ausbildung der Auskleidung für die Backkammer des Backofens als rohrförmigen Körper vorzusehen, wobei die Auskleidung in ihrer Gesamtheit herstellbar ist, wobei allerdings auch die Auskleidung aus mehreren Teilen bestehen kann, die schlussendlich zur Backkammer zusammensetzbar sind. Insbesondere bei größeren Backkammern mag es erforderlich sein, dass die Auskleidung einzelne rohrförmige Körper aufweist, die zur Bildung der Auskleidung insgesamt hintereinanderliegend miteinander verbindbar sind. Hierbei ist vorgesehen, dass die einzelnen rohrförmigen Körper durch eine Nut- und Federverbindung miteinander in Verbindung stehen, wobei vorteilhaft in Bereich des Übergangs zwischen zwei rohrförmigen Körpern diese verklebt sind. Denkbar ist hierbei der Einsatz von sogenannten Silikonklebern, die eine Temperaturfestigkeit von bis zu 460 ° aufweisen. Als Alternative ist allerdings auch vorstellbar, die einzelnen rohrförmigen Körper durch Zuganker miteinander zu verbinden. In einem solchen Fall ist es entbehrlich, die einzelnen rohrförmigen Körper im Bereich ihrer Verbindung zu verkleben, ausgeschlossen ist dies jedoch nicht.

Gegenstand der Erfindung ist ebenfalls ein Verfahren zur Herstellung einer Backplatte oder einer Auskleidung mit einer Mischung aus z. B. reaktiver Tonerde, Mikrosilika, Betonverflüssiger und SiC, gegebenenfalls bei Ersatz von reaktiver Tonerde durch Tonerdeschmelzzement sowie gegebenenfalls einem weiteren Zuschlagstoff wie z. B. Schamottkömung, wobei sich das Verfahren dadurch auszeichnet, dass die Mischung durch Zugabe von Wasser verflüssigt wird, das verflüssigte Gemisch in eine Form gegeben wird, wobei insbesondere eine Verdichtung der Masse durch Vibration erfolgt. Nach der Aushärtung (hydraulische Bindung) werden die Platten bzw. die Elemente für die Auskleidung oder die Auskleidung insgesamt entformt und dann insbesondere bei erhöhter Temperatur im Bereich von 80 - 150° C, und hier insbesondere im Bereich von 120°C bis auf einen Restfeuchtegehalt von 2-Ma.% getrocknet, wobei nach der Trocknung eine Dehydratisierung bei ca. 200° C bis 320° C, insbesondere 300 °C stattfindet, und anschließend eine keramische Verfestigung im Temperaturbereich zwischen 950° C und 1200° C, insbesondere bei 1000° C erfolgt.

Bei der Herstellung der Platten bzw. der Elemente hat sich als weiterhin vorteilhaft herausgestellt, dass sich diese, selbst wenn sie nur eine Stärke von 15 mm aufweisen, im Wesentlichen nicht verziehen. Das heißt, die Bauteile sind mit einem nur geringen Verzug herstellbar.

Anhand einer Rezeptur soll die Erfindung nachstehend näher erläutert werden:

| Beispielrezeptur | Gehalt / Ma.-% | Al2O3 | SiO2 | CaO | SiC |
|---|---|---|---|---|---|
| Schamottekörnung 0-3mm | 51 | 22 | 25 | 0 | 0 |

(fortgesetzt)

| Beispielrezeptur | Gehalt / Ma.-% | Al2O3 | SiO2 | CaO | SiC |
|---|---|---|---|---|---|
| SiC Feinkörnung 0-1 mm | 27 | 0 | 1 | 0 | 26 |
| Tonerdeschmelzzement | 6 | 4 | 0 | 2 | 0 |
| Mikrosilika | 5 | 0 | 5 | 0 | 0 |
| reaktive Tonerde | 10 | 10 | 0 | 0 | 0 |
| Betonverflüssiger | 1 | 0,9 | 0 | 0 | 0 |
| | 100 | 36,9 | 31 | 2 | 26 |

Die Schamottekörnung ist hierbei der Zuschlagstoff.

Die Mischung wird mit Wasser verflüssigt, in eine Form gegeben, und in der Form durch Entstehen einer hydraulischen Bindung ausgehärtet. Nach dem Entfernen der Platte aus der Form erfolgt die Trocknung bei ca. 120° C bis auf einen Restfeuchtegehalt von 2 Ma.-% Wasser. Nachfolgend wird die Platte bei 300° C dehydratisiert. Bei der Dehydratisierung werden die OH-Gruppen bei erhöhter Temperatur abgespalten. Hierbei wird die hydraulische Bindephase, die CA-H-Phase zerstört. Dadurch, dass die Platte bei der CA-H-Phase aber nicht belastet oder bewegt wird, ist dies unschädlich. Die eigentliche Festigkeit erhält man dann, wenn bei der Erwärmung auf etwa 950° C -1200° C eine keramische Bindung entsteht. Bei solchen Temperaturen schmelzen allerdings übliche Betonplatten. Die Platte und auch die Auskleidung sind bis zu Einsatztemperaturen von ungefähr 1000° C dauerhaft beständig. Insbesondere finden bei den im Backofen herrschenden Temperaturen von bis zu 350° C keine Gefügeänderungen mehr statt.

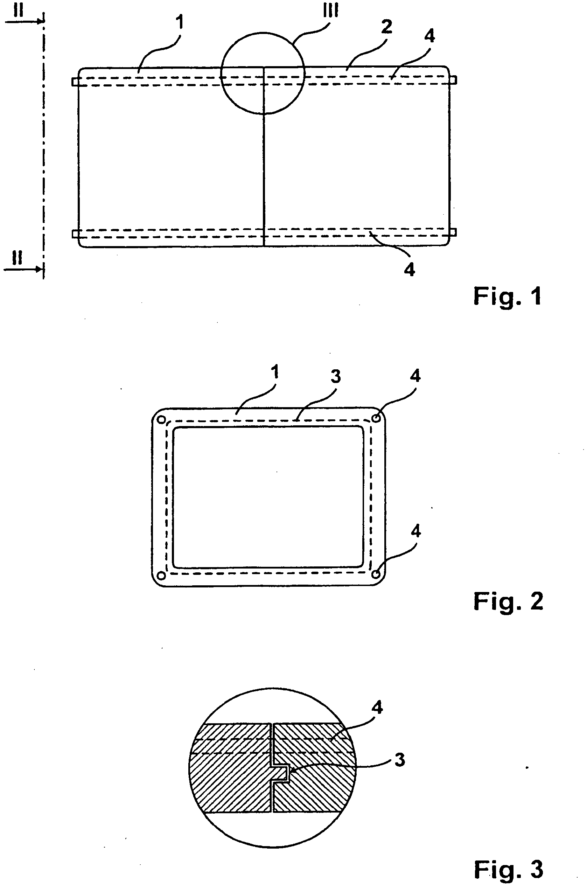

Zur Erläuterung der Herstellung der Auskleidung einer Backkammer eines Backofens wird nachstehend auf die Figuren 1 und 2 verwiesen.

So zeigen

Fig. 1.    eine aus zwei Elementen bestehende Auskleidung für eine Backkammer eines Backofens;
Fig. 2    eine Ansicht gemäß der Linie II aus Fig. 1;
Fig. 3    zeigt die Einzelheit III aus Fig. 1 in vergrößerter Darstellung.

Die beiden rohrförmigen Auskleidungselemente 1 und 2 stehen durch eine Nut- und Federverbindung 3 miteinander in Verbindung. Im Bereich der Nut-und Federverbindung kann eine Verklebung erfolgen, um die Auskleidung dicht zu gestalten. Des Weiteren ist denkbar, wie sich dies ebenfalls aus den Fig. 1 und 2 ergibt, einen sogenannten Zuganker in den Ecken der einzelnen Auskleidungsabschnitte vorzusehen, und die Auskleidungsabschnitte miteinander zu verbinden. Die an den vier Ecken angeordneten Zuganker sind hierbei mit 4 bezeichnet.

Ohne dass dies dargestellt ist, besteht die Möglichkeit, die Auskleidung aus einzelnen Decken-, Boden- und Wandelementen auszubilden, die z. B. durch Silikonkleber miteinander verbindbar sind.

**Patentansprüche**

1. Backofen zur Herstellung von Brot, Brötchen usw., wobei der Backraum eine Auskleidung und/oder mindestens eine Backplatte aufweist,
**dadurch gekennzeichnet,**
**dass** die Auskleidung und/oder die mindestens eine Backplatte aus einer Mischung hergestellt ist, die mindestens folgende Bestandteile ausweist:

   reaktive Tonerde
   Mikrosilika
   Betonverflüssiger
   Siliciumcarbid.

2. Backofen nach Anspruch 1,
**dadurch gekennzeichnet,**
**dass** zusätzlich zu oder anstelle von reaktiver Tonerde auch Tonerdeschmelzzement einsetzbar ist.

3. Backofen nach einem der voranstehenden Ansprüche,

**dadurch gekennzeichnet,**
**dass** die Mischung einen Zuschlagstoff, z. B. Schamottkörnung, aufweist.

4. Backofen nach einem der voranstehenden Ansprüche,
   **dadurch gekennzeichnet,**
   **dass** die Anteile der Mischung wie folgt ausgewählt sind:

reaktive Tonerde

Mikrosilika $\left.\begin{array}{l}\\\\\\\end{array}\right\}$ 5 – 60 Ma.-%,

Betonverflüssiger $\qquad$ vorzugsweise 25 Ma.-%

Siliciumcarbid 20 – 95 Ma.-%,

vorzugsweise 50 Ma.-%

5. Backofen nach einem der Ansprüche 3 oder 4,
   **dadurch gekennzeichnet,**
   **dass** der Zuschlagstoff in der Mischung zwischen 0 und 20 Ma.-% ausmacht.

6. Backofen nach einem der voranstehenden Ansprüche,
   **dadurch gekennzeichnet,**
   **dass** die Auskleidung Wand-, Boden- und Deckenelemente umfasst.

7. Backofen nach einem der voranstehenden Ansprüche,
   **dadurch gekennzeichnet,**
   **dass** die Auskleidung als rohrförmiger Körper ausgebildet ist.

8. Backofen nach einem der voranstehenden Ansprüche,
   **dadurch gekennzeichnet,**
   **dass** die Auskleidung einzelne Elemente (1, 2) als rohrförmige Körper aufweist, die zur Bildung der Auskleidung zu einer rohrförmigen Auskleidung hintereinanderliegend miteinander verbindbar sind.

9. Backofen nach einem der voranstehenden Ansprüche,
   **dadurch gekennzeichnet,**
   **dass** die einzelnen rohrförmigen Elemente (1, 2) durch eine Nut- und Federverbindung (3) miteinander in Verbindung stehen,

10. Backofen nach einem der voranstehenden Ansprüche,
    **dadurch gekennzeichet,**
    dass die einzelnen rohrförmigen Elemente (1, 2) durch Zuganker (4) miteinander verbunden sind.

11. Verfahren zur Herstellung einer Auskleidung und/oder einer Backplatte für einen Backoien aus einer Mischung gemäß einem oder mehrerer der voranstehenden Ansprüche
    **dadurch gekennzeichnet,**
    **dass** die Mischung durch Zugabe von Wasser vertlüssigt wird, dass das verflüssigte Gemisch in eine Form gegeben wird, wobei nach der hydraulischen Bindung die entformte Platte und/oder Auskleidung zunächst bel erhöhter Temperatur bis auf einen Restfeuchtegehalt von ca. 2 Ma.-% Wasser getrocknet wird, nach der Trocknung eine Dehydratisierung bei ca. 200° bis 320° C, insbesondere bei 300° C stattfindet, und anschließend eine keramische Verfestigung bei ca. 950° bis 1200° C, insbesondere bei 1000° C, erfolgt.

12. Verfahren nach Anspruch 11,
    **dadurch gekennzeichnet,**
    **dass** die Trocknung bei Temperaturen von 80° bis zu 150° C, insbesondere bis ca. 120° C vorgenommen wird.

**Claims**

1. A baking oven for making bread, bread rolls, etc., wherein the baking chamber has a lining and/or at least one baking plate,

 **characterized in that**

 the lining and/or the at least one baking plate is made of a mixture that comprises at least the following components:

     reactive alumina
     microsilica
     concrete plasticizer
     silicon carbide.

2. The baking oven according to claim 1,
 **characterized in that**
 alumina cement is also usable in addition to or instead of reactive alumina.

3. The baking oven according to one of the afore-mentioned claims,
 **characterized in that**
 the mixture comprises an aggregate, e.g. chamotte grains.

4. The baking oven according to one of the afore-mentioned claims,
 **characterized in that**
 the proportions of the mixture are chosen as follows:

| | |
|---|---|
| reactive alumina, microsilica, concrete plasticizer} | 5 - 60 m%, |
| preferably 25 m%, | |
| silicon carbide | 20 - 95 m%, |
| preferably 50 m% | |

5. The baking oven according to one of the claims 3 or 4,
 **characterized in that**
 the aggregate represents between 0 and 20 m% in the mixture.

6. The baking oven according to one of the afore-mentioned claims,
 **characterized in that**
 the lining comprises wall, floor and ceiling elements.

7. The baking oven according to one of the afore-mentioned claims,*
 **characterized in that**
 the lining is designed as a tubular body.

8. The baking oven according to one of the afore-mentioned claims,
 **characterized in that**
 the lining has individual elements (1, 2) shaped as tubular bodies, which are connectable to each other in a row in order to form the tubular lining.

9. The baking oven according to one of the afore-mentioned claims,
 **characterized in that**
 the individual tubular elements (1, 2) are connected to each other by a tongue and groove connection (3).

10. The baking oven according to one of the afore-mentioned claims,
 **characterized in that**
 the individual tubular elements (1, 2) are connected to each other by tension anchors (4).

11. A method for manufacturing a lining and/or a baking plate for a baking oven from a mixture according to one or several of the afore-mentioned claims,

**characterized in that**
the mixture is liquefied by adding water, that the liquefied mixture is filled into a mold, wherein after hydraulic binding, the demolded plate and/or lining is first dried at a high temperature to a residual moisture content of ca. 2 m% of water, a dehydration occurs after drying at ca. 200 to 320°C, more specifically at 300°C, and a ceramic solidification subsequently occurs at ca. 950° to 1200°C, more specifically at 1000°C.

**12.** The method according to claim 11,
**characterized in that**
drying is conducted at temperatures of 80°C to 150°C, more specifically at 120°C.


## Revendications

**1.** Four pour la fabrication de pain, de petits pains etc., dans lequel l'espace de cuisson comporte un revêtement et/ou au moins une plaque de cuisson,
**caractérisé en ce que**,
le revêtement et/ou ladite au moins une plaque de cuisson sont réalisés en un composite comprenant au moins les composants suivants :

   alumine réactive
   silice micronisée
   fluidifiant de béton
   carbure de silicium.

**2.** Four selon la revendication 1,
**caractérisé en ce que**,
en complément ou en substitution de l'alumine réactive, un élément de fusion de l'alumine peut être introduit.

**3.** Four selon l'une des revendications précédentes,
**caractérisé en ce que**,
le mélange comporte un composant supplémentaire, par exemple un granulat d'argile réfractaire.

**4.** Four selon l'une des revendications précédentes,
**caractérisé en ce que**,
la proportion des composants du mélange est choisie comme suit :

| | |
|---|---|
| alumine réactive<br>silice micronisée<br>fluidifiant de béton | 5-60 % en poids et de préférence 25% en poids |
| Carbure de silicium | 20-95% en poids et de préférence 50% en poids |

**5.** Four selon l'une des revendications 3 ou 4,
**caractérisé en ce que**,
le matériau complémentaire représente entre 0 et 20% en poids du mélange.

**6.** Four selon l'une des revendications précédentes,
**caractérisé en ce que**,
le revêtement englobe des éléments de paroi, de sol et de plafond.

**7.** Four selon l'une des revendications précédentes,
**caractérisé en ce que**,
le revêtement est réalisé au moyen d'éléments tubulaires.

**8.** Four selon l'une des revendications précédentes,
**caractérisé en ce que**,
le revêtement comporte des éléments individuels (1, 2) de forme tubulaire, qui sont disposés à la suite les uns des autres pour la formation d'un revêtement tubulaire et reliés entre eux.

9. Four selon l'une des revendications précédentes,
   **caractérisé en ce que**,
   les éléments individuels de forme tubulaire (1, 2) sont assemblés par une liaison du type tenon-mortaise (3).

10. Four selon l'une des revendications précédentes,
    **caractérisé en ce que**,
    les segments d'éléments individuels de forme tubulaire (1, 2) sont accouplés par des ancres de traction (4).

11. Procédé de réalisation d'un revêtement et/ou d'une plaque de sol d'un four en un mélange selon une ou plusieurs des revendications précédentes,
    **caractérisé en ce que**,
    le mélange est dilué par ajout d'eau, **en ce que** le mélange fluidifié est mis dans une forme, dans lequel, après la prise hydraulique de la plaque et/ou du revêtement intervient une phase de séchage à température plus élevée jusqu'à une dessiccation résiduelle à 2% en poids d'humidité, **en ce qu'**une déshydratation est faite à une température de l'ordre de 200°C à 320°C, en particulier à 300°C, suivie d'un durcissement céramique qui est effectué à une température de l'ordre de 950°C à 1200°C et de préférence à 1000°C.

12. Procédé selon la revendication 11,
    **caractérisé en ce que**,
    le séchage est effectué à des températures allant de 80°C à 150°C, et en particulier à 120°C.

Fig. 1

Fig. 2

Fig. 3